# EUROPEAN PATENT SPECIFICATION

(11) **EP 4 289 634 B1**
(45) Date of publication and mention of the grant of the patent: **29.05.2024**
(21) Application number: 23175321.1
(22) Date of filing: 25.05.2023
(51) Int. Cl.: B60C 11/03, B60C 9/22, B60C 3/04

(54) **TIRE**
REIFEN
PNEUMATIQUE

(30) Priority: 09.06.2022 JP 2022093941
(43) Date of publication of application: 13.12.2023
(73) Proprietor: Sumitomo Rubber Industries, Ltd., Kobe-shi, Hyogo-ken 651-0072 (JP)
(72) Inventor: MIHARA, Naoya, Kobe-shi 651-0072 (JP)
(74) Representative: Manitz Finsterwald Patent- und Rechtsanwaltspartnerschaft mbB

(56) References cited:
- EP-A1- 3 895 913
- EP-A1- 4 119 358
- WO-A1-2017/103448
- WO-A1-2019/122791
- US-A1- 2017 174 008
- US-A1- 2022 097 456

## Description

### BACKGROUND OF THE INVENTION

### Field of the Invention

The present invention relates to a tire.

### Background Art

Japanese Laid-Open Patent Publication No. 2017-7424 describes a heavy duty tire having circumferential main grooves and circumferential narrow grooves. The circumferential narrow grooves each demarcate two rib-like land portions that can come into contact with each other when the tire comes into contact with the ground. Such a heavy duty tire is considered to have reduced rolling resistance.

In recent years, the international standard "UN/ECE Regulation No. 117 02 Series (R117-02)" and the "labeling system" of The Japan Automobile Tyre Manufacturers Association, Inc. have been attracting attention, and further improvement of rolling resistance performance and wet grip performance is required.

The present invention has been made in view of the above circumstances, and a main object of the present invention is to provide a tire that can have further improved rolling resistance performance and wet grip performance.

A tire according to the preamble of claim 1 is known from WO 2017/103448 A1. Related tires are described in WO 2019/122791 A1, EP 3 895 913 A1, US 2022/097456 A1, US 2017/174008 A1 and EP 4 119 358 A1 (document according to Article 54(3) EPC).

### SUMMARY OF THE INVENTION

The object is solved by a tire having the features of claim 1. Sub-claims are directed at preferable embodiments of the invention.

The present invention is directed to a tire including a tread portion having a first tread end, wherein: the tread portion has a shoulder circumferential groove adjacent to the first tread end, and a crown circumferential groove provided between the shoulder circumferential groove and a tire equator; each of the shoulder circumferential groove and the crown circumferential groove includes a pair of groove walls; in a standardized load-applied state where the tire is fitted on a standardized rim at a standardized internal pressure, a standardized load is applied to the tire, and the tire is brought into contact with a flat surface at a camber angle of 0°, the pair of groove walls of the shoulder circumferential groove are not in contact with each other, and at least parts of the pair of groove walls of the crown circumferential groove are in contact with each other; the crown circumferential groove has a widened portion on an inner side in a tire radial direction with respect to a tread ground-contact surface; a groove width of the widened portion is larger than a groove width at the tread ground-contact surface of the crown circumferential groove; a band layer including a jointless band ply in which a band cord is helically wound at an angle of 5 degrees or less with respect to a tire circumferential direction is provided inside the tread portion; the jointless band ply is placed so as to cover the tire equator; and an outer end in a tire axial direction on the first tread end side of the jointless band ply is located on an outer side in the tire axial direction with respect to an outer end in the tire axial direction of the shoulder circumferential groove.

As a result of employing the above configuration, the tire of the present invention can have further improved rolling resistance performance and wet grip performance.

According to an embodiment of the invention, the groove width at the tread ground-contact surface of the crown circumferential groove is 0.01 to 0.2 times a groove width of the shoulder circumferential groove.

According to an embodiment of the invention, a groove area of a transverse cross-section of the crown circumferential groove is 0.1 to 0.5 times a groove area of a transverse cross-section of the shoulder circumferential groove.

According to an embodiment of the invention, a length in the tire radial direction from the tread ground-contact surface to the widened portion is 0.4 to 0.7 times a groove depth of the crown circumferential groove.

According to an embodiment of the invention, a separation distance in the tire axial direction between the outer end of the shoulder circumferential groove and the outer end of the jointless band ply is 10% to 50% of a separation distance in the tire axial direction between the outer end of the shoulder circumferential groove and the first tread end.

According to an embodiment of the invention, a belt layer including at least three belt plies in which belt cords are arranged at an angle of 10 to 50 degrees with respect to the tire circumferential direction is provided inside the tread portion, and at least one belt ply of the at least three belt plies is located inward of the jointless band ply in the tire radial direction.

According to an embodiment of the invention, the belt ply located inward of the jointless band ply in the tire radial direction has an outer end on the outer side in the tire axial direction with respect to the outer end of the jointless band ply.

According to an embodiment of the invention, the band layer includes a jointless edge band ply which is adjacent to the first tread end and in which a band cord is helically wound at an angle of 5 degrees or less with respect to the tire circumferential direction, and the jointless edge band ply straddles the outer end of the jointless band ply.

According to an embodiment of the invention, an inner end in the tire axial direction of the jointless edge band ply is located on the outer side in the tire axial direction with respect to the outer end of the shoulder circumferential groove.

According to an embodiment of the invention, the tire is a heavy duty tire having an aspect ratio of 70% or less.

### BRIEF DESCRIPTION OF THE DRAWINGS

FIG. 1 is a plan view of a tread portion showing an embodiment of the tire of the present invention;
FIG. 2(A) is a cross-sectional view taken along a line A-A in FIG. 1;
FIG. 2(B) is a cross-sectional view taken along a line B-B in FIG. 1;
FIG. 3 is a tire meridian cross-sectional view of the tread portion of the tire in FIG. 1;
FIG. 4 is an enlarged view of FIG. 3; and
FIG. 5 is a tire meridian cross-sectional view of a tread portion of another embodiment of the invention.

### DETAILED DESCRIPTION

Hereinafter, an embodiment of the present invention will be described with reference to the drawings.

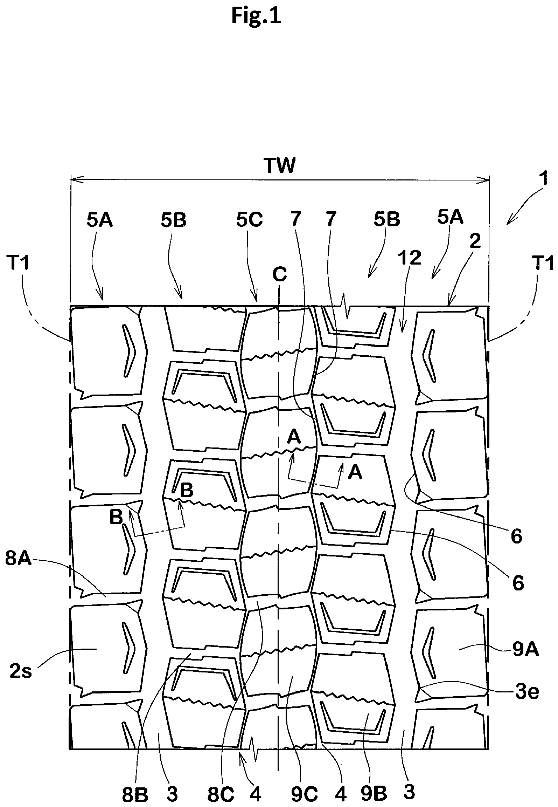

FIG. 1 is a plan view of a tread portion 2 of a tire 1 of the present embodiment. The tire 1 of the present embodiment of the invention is suitably used, for example, as a heavy duty tire. The present invention may be applied to heavy duty pneumatic tires as well as pneumatic tires for a passenger car and a small truck.

As shown in FIG. 1, the tread portion 2 of the present embodiment of the invention has shoulder circumferential grooves 3 adjacent to first tread ends T1, and crown circumferential grooves 4 provided between the shoulder circumferential grooves 3 and a tire equator C. Each of the shoulder circumferential grooves 3 and the crown circumferential grooves 4 includes a pair of groove walls 6 or 7.

The stiffness of the tread portion 2 has a large contribution to rolling resistance, and it is particularly effective to increase the stiffness of the tread portion 2 on the tire equator C side where the ground-contact pressure is high. Therefore, in the present invention, in a standardized load-applied state, the pair of groove walls 6 of each shoulder circumferential groove 3 are not in contact with each other. In addition, at least parts of the pair of groove walls 7 of each crown circumferential groove 4 are in contact with each other. Accordingly, in the tire 1 of the present invention, when a tread ground-contact surface 2s comes into contact with the ground, the groove walls 7 of each crown circumferential groove 4 support each other, and thus deformation of land portions adjacent to the crown circumferential groove 4 is suppressed, thereby reducing rolling resistance. In addition, even when the tread ground-contact surface 2s comes into contact with the ground, the pair of groove walls 6 of each shoulder circumferential groove 3 do not come into contact with each other, and thus the shoulder circumferential groove 3 exhibits an excellent drainage effect.

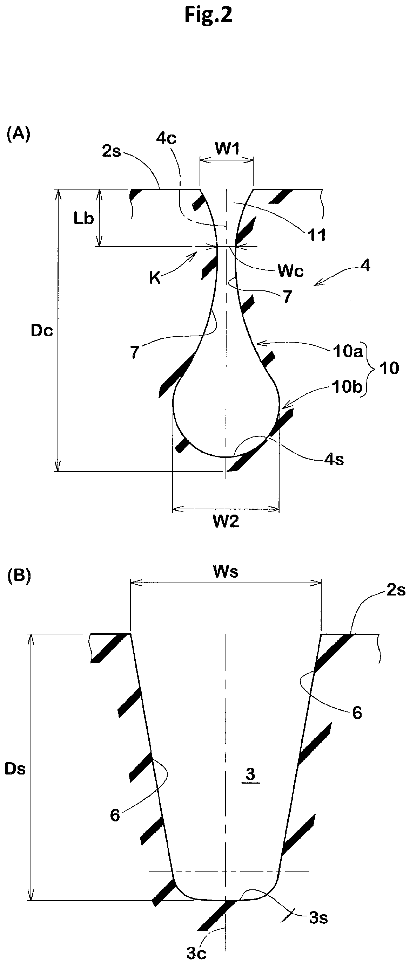

FIG. 2(A) is a cross-sectional view taken along a line A-A in FIG. 1, and shows a transverse cross-section in a direction orthogonal to a groove center line 4c of the crown circumferential groove 4. As shown in FIG. 2(A), the crown circumferential groove 4 has a widened portion 10 on the inner side in the tire radial direction with respect to the tread ground-contact surface 2s. The widened portion 10 is formed such that a groove width W2 thereof is larger than a groove width W1 at the tread ground-contact surface 2s of the crown circumferential groove 4. Such a widened portion 10 contributes to suppressing a decrease in the stiffness of the tread portion 2 to enhance rolling resistance performance in the early stage of wear, and enhancing drainage performance in the late stage of wear.

As shown in FIG. 1, the tread portion 2 of the present embodiment of the invention includes the first tread ends T1 on both sides in the tire axial direction. In the case where the tire 1 is a pneumatic tire, each first tread end T1 is a ground-contact position on the outermost side in the tire axial direction when a standardized load is applied to the tire 1 in a standardized state and the tire 1 is brought into contact with a flat surface at a camber angle of 0°. In the case of the pneumatic tire 1 for which various standards are defined, the "standardized state" is a state where the tire 1 is fitted on a standardized rim and inflated to a standardized internal pressure and no load is applied to the tire 1. In the case of a tire for which various standards are not defined, the standardized state means a standard use state, corresponding to the purpose of use of the tire, where no load is applied to the tire. In the present specification, unless otherwise specified, dimensions and the like of components of the tire 1 are values measured in the standardized state. In addition, the distance in the tire axial direction between the first tread ends T1 is a tread width TW.

The "standardized rim" is a rim that is defined, in a standard system including a standard on which the tire 1 is based, by the standard for each tire, and is, for example, the "standard rim" in the JATMA standard, the "Design Rim" in the TRA standard, or the "Measuring Rim" in the ETRTO standard.

The "standardized internal pressure" is an air pressure that is defined, in a standard system including a standard on which the tire 1 is based, by the standard for each tire, and is the "highest air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "standardized load" is a load that is defined, in a standard system including a standard on which the tire 1 is based, by the standard for each tire, and is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard. In the case of a tire for which various standards are not defined, the "standardized load" refers to the maximum load applicable when the tire is used, according to the above-described standards.

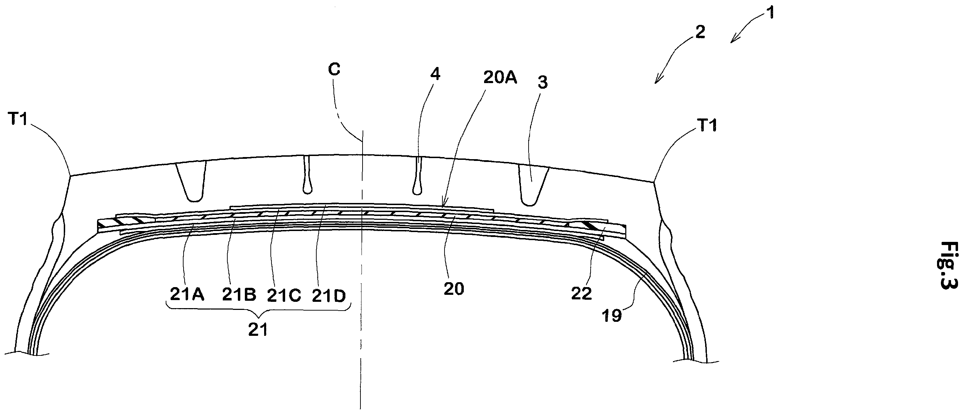

FIG. 3 is a tire meridian cross-sectional view of the tread portion 2 of the tire 1. The present invention is preferably applied to the tire (heavy duty tire) 1 having an aspect ratio of 70% or less. In such a tire 1, the shape of the tread portion 2 is easily deformed during running such that, for example, the groove area is decreased due to an increase in the size of an outer diameter shape, so that it is difficult to obtain desired rolling resistance performance and wet grip performance. Therefore, the technology of the present invention is to suppress deformation during running, thereby exhibiting these performances as desired. The "aspect ratio" is the ratio of a cross-sectional height to a cross-sectional width of the tire 1. The "cross-sectional width" is the maximum width in the tire axial direction obtained by excluding patterns, characters, and the like on the side surfaces of the tire 1. The "cross-sectional height" is 1/2 of the difference between the outer diameter of the tire 1 and the rim diameter of the standardized rim.

As shown in FIG. 3, in the tire 1 of the present embodiment of the invention, a carcass 19, a band layer 20, and a belt layer 21 are provided inside the tread portion 2. In the present embodiment of the invention, a well-known structure is employed for the carcass 19.

The band layer 20 is formed so as to include a jointless band ply 20A in which a band cord (not shown) is helically wound at an angle of 5 degrees or less with respect to the tire circumferential direction. Such a jointless band ply 20A effectively prevents an increase in the outer diameter shape of the tire 1 due to running (radially outward growth) and serves to enhance rolling resistance performance. In particular, the jointless band ply 20A exhibits a high effect of suppressing the radially outward growth in the tire 1 having an aspect ratio of 70% or less. In the present embodiment of the invention, cords having a well-known structure and containing steel are used as the band cord and belt cords described later.

In the present embodiment of the invention, the jointless band ply 20A is placed so as to cover the tire equator C. Accordingly, the above-described effect is effectively exhibited on both sides in the tire axial direction from the tire equator C.

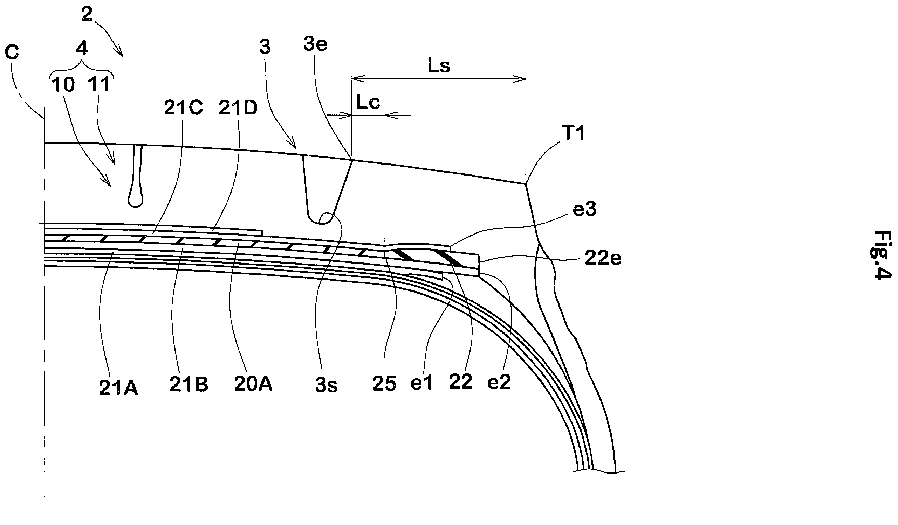

FIG. 4 is an enlarged view of FIG. 3. As shown in FIG. 4, outer ends 25 in the tire axial direction on the first tread end T1 sides (in the present embodiment of the invention, both ends in the tire axial direction) of the jointless band ply 20A are located on the outer side in the tire axial direction with respect to outer ends 3e in the tire axial direction of the shoulder circumferential grooves 3. Accordingly, the radially outward growth is further effectively suppressed. In the case where each shoulder circumferential groove 3 extends in a zigzag manner as in the present embodiment of the invention, the outer end 3e of the shoulder circumferential groove 3 is the portion where the shoulder circumferential groove 3 is located on the outermost side in the tire axial direction over the tire circumferential direction.

As shown in FIG. 1, on the tread portion 2 of the present embodiment of the invention, the shoulder circumferential grooves 3 and the crown circumferential grooves 4 are provided on both sides of the tire equator C. Furthermore, for example, a plurality of shoulder lateral grooves 8A, a plurality of middle lateral grooves 8B, and a plurality of crown lateral grooves 8C are formed on the tread portion 2. For example, each shoulder lateral groove 8A connects the shoulder circumferential groove 3 and the first tread end T1. In the present embodiment of the invention, each middle lateral groove 8B connects the shoulder circumferential groove 3 and the crown circumferential groove 4. For example, each crown lateral groove 8C connects the crown circumferential grooves 4 on both sides.

Thus, the tread portion 2 includes, for example, shoulder land portions 5A in each of which shoulder blocks 9A are aligned, middle land portions 5B in each of which middle blocks 9B are aligned, and a crown land portion 5C in which crown blocks 9C are aligned. Each shoulder block 9A of the present embodiment of the invention is formed in a substantially pentagonal shape in a tread plan view. Each of the middle blocks 9B and the crown blocks 9C is formed, for example, in a barrel-like substantially hexagonal shape having a larger width in the tire axial direction at a center portion in the tire circumferential direction than at both side portions in the tire circumferential direction, in a tread plan view. The shapes of the shoulder blocks 9A, the middle blocks 9B, and the crown blocks 9C are not limited to such shapes.

FIG. 2(B) is a cross-sectional view taken along a line B-B in FIG. 1, and shows a transverse cross-section in a direction orthogonal to a groove center line 3c of the shoulder circumferential groove 3. As shown in FIG. 2(B), the pair of groove walls 6 of the shoulder circumferential groove 3 extend from the tread ground-contact surface 2s toward the inner side in the tire radial direction in a tapered manner. A groove width Ws of the shoulder circumferential groove 3 is, for example, preferably 6 to 16 mm. A groove depth Ds of the shoulder circumferential groove 3 is, for example, preferably 10 to 20 mm.

As shown in FIG. 2(A), the crown circumferential groove 4 includes the widened portion 10, and an outer portion 11 extending outward in the tire radial direction from the widened portion 10. In the present embodiment of the invention, the outer portion 11 has a groove width continuously and gradually decreasing from the tread ground-contact surface 2s toward the inner side in the tire radial direction. The outer portion 11 may have, for example, a groove width that is uniform from the tread ground-contact surface 2s toward the inner side in the tire radial direction (as shown in FIG. 4). The widened portion 10 includes, for example, a first portion 10a having a groove width continuously and gradually increasing toward the inner side in the tire radial direction, and a second portion 10b connected to the first portion 10a and having a groove width gradually decreasing toward the inner side in the tire radial direction. The second portion 10b includes a groove bottom 4s of the crown circumferential groove 4. The widened portion 10 is defined as a groove-like portion formed between the groove bottom 4s and the position at which the groove width is the smallest and which is on the innermost side in the tire radial direction on the outer side in the tire radial direction with respect to the position at which the groove width W2 of the widened portion 10 is the largest.

When the tread ground-contact surface 2s comes into contact with the ground, the respective groove walls 7 of such a crown circumferential groove 4 initially come into contact with each other at a boundary K between the widened portion 10 and the outer portion 11, and the contact area therebetween is gradually increased from the boundary K toward the inner and outer sides in the tire radial direction. Accordingly, the contact pressure between the groove walls 7 is reduced, and the effect of the groove walls 7 supporting each other is exhibited at a higher level, so that rolling resistance is reduced further.

The groove width W 1 at the tread ground-contact surface 2s of the crown circumferential groove 4 is preferably 0.01 to 0.2 times the groove width Ws of the shoulder circumferential groove 3. Accordingly, wet grip performance and rolling resistance performance can be enhanced further. In order to more effectively exhibit such an effect, the groove width W1 is more preferably not less than 0.05 times and more preferably not greater than 0.15 times the groove width Ws.

In order to more effectively exhibit the above-described effect, the groove area of the transverse cross-section of the crown circumferential groove 4 is preferably not less than 0.1 times and further preferably not less than 0.2 times the groove area of the transverse cross-section of the shoulder circumferential groove 3, and is preferably not greater than 0.5 times and further preferably not greater than 0.4 times the groove area of the transverse cross-section of the shoulder circumferential groove 3.

A length Lb in the tire radial direction from the tread ground-contact surface 2s to the widened portion 10 is preferably not less than 0.4 times and further preferably not less than 0.5 times a groove depth Dc of the crown circumferential groove 4, and is preferably not greater than 0.7 times and further preferably not greater than 0.6 times the groove depth Dc. Since the length Lb is not less than 0.4 times the groove depth Dc, a decrease in the stiffness on the tread ground-contact surface 2s side of the tread portion 2 can be suppressed, thereby enhancing rolling resistance performance. Since the length Lb is not greater than 0.7 times the groove depth Dc, the volume of the widened portion 10 is maintained, thereby exhibiting high drainage performance. The groove depth Dc of the crown circumferential groove 4 is, for example, preferably not less than 90% and further preferably not less than 95% of the groove depth Ds of the shoulder circumferential groove 3, and is preferably not greater than 110% and further preferably not greater than 105% of the groove depth Ds. In the present embodiment of the invention, the length Lb is the length in the tire radial direction of the outer portion 11.

A groove width Wc of the crown circumferential groove 4 at the boundary K between the widened portion 10 and the outer portion 11 is, for example, preferably not less than 70% and further preferably not less than 80% of the groove width W1 of the crown circumferential groove 4, and is preferably not greater than 100% of the groove width W1.

The jointless band ply 20A is likely to be broken at each outer end 25 thereof. Therefore, the outer end 25 is preferably separated from the first tread end T1 to which a relatively large lateral force is applied during running of the tire 1. On the other hand, if the outer end 25 is excessively close to the shoulder circumferential groove 3, damage such as cracks may occur starting from a groove bottom 3s of the shoulder circumferential groove 3. Therefore, a separation distance Lc in the tire axial direction between the outer end 3e of the shoulder circumferential groove 3 and the outer end 25 of the jointless band ply 20A is preferably not less than 10% and further preferably not less than 15% of a separation distance Ls in the tire axial direction between the outer end 3e of the shoulder circumferential groove 3 and the first tread end T1, and is preferably not greater than 50% and further preferably not greater than 45% of the separation distance Ls.

The separation distance Ls is not particularly limited, but is preferably not less than 10% and further preferably not less than 15% of the tread width TW and is preferably not greater than 26% and further preferably not greater than 23% of the tread width TW.

As shown in FIG. 3 and FIG. 4, the belt layer 21 is formed from at least three belt plies in which belt cords (not shown) are arranged at an angle of 10 to 50 degrees with respect to the tire circumferential direction. In the present embodiment of the invention, the belt layer 21 includes a first belt ply 21A, a second belt ply 21B, a third belt ply 21C, and a fourth belt ply 21D which are stacked from the inner side toward the outer side in the tire radial direction. Each of the belt plies 21A to 21D is formed so as to have a well-known structure.

At least one of the at least three belt plies is located, for example, inward of the jointless band ply 20A in the tire radial direction. Accordingly, the tension applied to the jointless band ply 20A can be reduced. In the present embodiment of the invention, the first belt ply 21A and the second belt ply 21B are located on the inner side in the tire radial direction with respect to the jointless band ply 20A.

The belt ply located inward of the jointless band ply 20A in the tire radial direction has, for example, an outer end on the outer side in the tire axial direction with respect to the outer end 25 of the jointless band ply 20A. Accordingly, the large tension applied to the outer end 25 of the jointless band ply 20A can be reduced, and thus deformation of the tread portion 2 and deformation of each circumferential groove 3 or 4 are suppressed, thereby enhancing wet grip performance and rolling resistance performance. In the present embodiment of the invention, an outer end e1 of the first belt ply 21A and an outer end e2 of the second belt ply 21B are located on the outer side in the tire axial direction with respect to the outer end 25 of the jointless band ply 20A.

Also, for example, the third belt ply 21C adjacent to the outer side in the tire radial direction of the jointless band ply 20A has an outer end e3 on the outer side in the tire axial direction with respect to the outer end 25 of the jointless band ply 20A. Such a third belt ply 21C can reduce the large tension applied to the outer end 25 of the jointless band ply 20A.

In the tread portion 2 of the present embodiment of the invention, a reinforcing rubber 22 is provided so as to extend from each outer end 25 of the jointless band ply 20A toward the outer side in the tire axial direction and be interposed between the second belt ply 21B and the third belt ply 21C. Such a reinforcing rubber 22 maintains the distance between the second belt ply 21B and the third belt ply 21C and serves to reduce the tension applied to the jointless band ply 20A. An outer end 22e in the tire axial direction of the reinforcing rubber 22 is located at the same position in the tire axial direction as the outer end e2 of the second belt ply 21B. The reinforcing rubber 22 is formed so as to have a well-known structure.

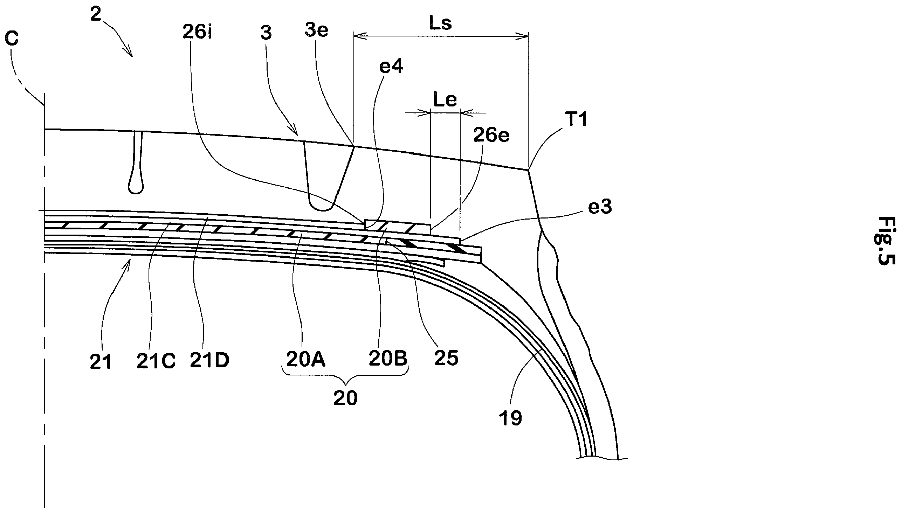

FIG. 5 is a tire meridian cross-sectional view of a tread portion 2 of another embodiment of the invention. The same components as those of the above embodiment of the invention are designated by the same reference characters, and the description thereof is sometimes omitted. As shown in FIG. 5, the band layer 20 of this embodiment of the invention is formed so as to further include a jointless edge band ply 20B which is adjacent to the first tread end T1 and in which a band cord is helically wound at an angle of 5 degrees or less with respect to the tire circumferential direction.

The jointless edge band ply 20B is placed so as to straddle the outer end 25 of the jointless band ply 20A. In other words, an inner end 26i in the tire axial direction of the jointless edge band ply 20B is located on the inner side in the tire axial direction with respect to the outer end 25 of the jointless band ply 20A. In addition, an outer end 26e in the tire axial direction of the jointless edge band ply 20B is located on the outer side in the tire axial direction with respect to the outer end 25 of the jointless band ply 20A. Such a jointless edge band ply 20B suppresses large movement of the outer end 25 of the jointless band ply 20A, thereby enhancing rolling resistance performance and improving uneven wear resistance.

The inner end 26i of the jointless edge band ply 20B is located, for example, on the outer side in the tire axial direction with respect to the outer end 3e of the shoulder circumferential groove 3. Accordingly, damage such as cracks starting from the groove bottom 3s of the shoulder circumferential groove 3 can be suppressed.

The jointless edge band ply 20B extends from an outer end e4 in the tire axial direction of the fourth belt ply 21D toward the outer side in the tire axial direction and terminates on the inner side in the tire axial direction with respect to the outer end e3 of the third belt ply 21C. A separation distance Le in the tire axial direction between the outer end 26e of the jointless edge band ply 20B and the outer end e3 of the third belt ply 21C is preferably not less than 15% and further preferably not less than 20% of the separation distance Ls, and is preferably not greater than 35% and further preferably not greater than 30% of the separation distance Ls.

Although the embodiments of the present invention have been described in detail above, the present invention is not limited to the above specific embodiments, and various modifications can be made to implement the present invention within the scope of the appended claims.

## Claims

1. A tire (1) comprising:
a tread portion (2) having a first tread end (T1), wherein
the tread portion (2) has a shoulder circumferential groove (3) adjacent to the first tread end (T1), and a crown circumferential groove (4) provided between the shoulder circumferential groove (3) and a tire equator (C),
each of the shoulder circumferential groove (3) and the crown circumferential groove (4) includes a pair of groove walls (6, 7),
in a standardized load-applied state where the tire (1) is fitted on a standardized rim at a standardized internal pressure, a standardized load is applied to the tire (1), and the tire (1) is brought into contact with a flat surface at a camber angle of 0°, the pair of groove walls (6) of the shoulder circumferential groove (3) are not in contact with each other, and at least parts of the pair of groove walls (7) of the crown circumferential groove (4) are in contact with each other,
the crown circumferential groove (4) has a widened portion (10) on an inner side in a tire radial direction with respect to a tread ground-contact surface (2s),
a groove width (W2) of the widened portion (10) is larger than a groove width (W1) at the tread ground-contact surface (2s) of the crown circumferential groove (4),
a band layer (20) including a jointless band ply (20A) in which a band cord is helically wound at an angle of 5 degrees or less with respect to a tire circumferential direction is provided inside the tread portion (2), and
the jointless band ply (20A) is placed so as to cover the tire equator (C),
**characterized in that**
an outer end (25) in a tire axial direction on the first tread end (T1) side of the jointless band ply (20A) is located on an outer side in the tire axial direction with respect to an outer end (3e) in the tire axial direction of the shoulder circumferential groove (3).

2. The tire (1) according to claim 1, wherein the groove width (W1) at the tread ground-contact surface (2s) of the crown circumferential groove (4) is 0.01 to 0.2 times a groove width (Ws) of the shoulder circumferential groove (3).

3. The tire (1) according to claim 1 or 2, wherein a groove area of a transverse cross-section of the crown circumferential groove (4) is 0.1 to 0.5 times a groove area of a transverse cross-section of the shoulder circumferential groove (3).

4. The tire (1) according to any one of claims 1 to 3, wherein a length (Lb) in the tire radial direction from the tread ground-contact surface (2s) to the widened portion (10) is 0.4 to 0.7 times a groove depth (Dc) of the crown circumferential groove (4).

5. The tire (1) according to any one of claims 1 to 4, wherein a separation distance (Lc) in the tire axial direction between the outer end (3e) of the shoulder circumferential groove (3) and the outer end (25) of the jointless band ply (20A) is 10% to 50% of a separation distance (Ls) in the tire axial direction between the outer end (3e) of the shoulder circumferential groove (3) and the first tread end (T1).

6. The tire (1) according to any one of claims 1 to 5, wherein
a belt layer (21) including at least three belt plies (21A, 21B, 21C, 21D) in which belt cords are arranged at an angle of 10 to 50 degrees with respect to the tire circumferential direction is provided inside the tread portion (2), and
at least one belt ply (21A, 21B) of the at least three belt plies (21A, 21B, 21C, 21D) is located inward of the jointless band ply (20A) in the tire radial direction.

7. The tire (1) according to claim 6, wherein the belt ply (21A, 21B) located inward of the jointless band ply (20A) in the tire radial direction has an outer end (e1, e2) on the outer side in the tire axial direction with respect to the outer end (25) of the jointless band ply (20A).

8. The tire (1) according to any one of claims 1 to 7, wherein
the band layer (20) includes a jointless edge band ply (20B) which is adjacent to the first tread end (T1) and in which a band cord is helically wound at an angle of 5 degrees or less with respect to the tire circumferential direction, and
the jointless edge band ply (20B) straddles the outer end (25) of the jointless band ply (20A).

9. The tire (1) according to claim 8, wherein an inner end (26i) in the tire axial direction of the jointless edge band ply (20B) is located on the outer side in the tire axial direction with respect to the outer end (3e) of the shoulder circumferential groove (3).

10. The tire (1) according to any one of claims 1 to 9, wherein the tire (1) is a heavy duty tire having an aspect ratio of 70% or less.

## Patentansprüche

1. Reifen (1), umfassend:
einen Laufflächenabschnitt (2) mit einem ersten Laufflächenende (T1), wobei
der Laufflächenabschnitt (2) eine Schulterumfangsrille (3) benachbart zu dem ersten Laufflächenende (T1) und eine Kronenumfangsrille (4) aufweist, die zwischen der Schulterumfangsrille (3) und einem Reifenäquator (C) vorgesehen ist,
jede der Schulterumfangsrille (3) und der Kronenumfangsrille (4) ein Paar Rillenwände (6, 7) umfasst,
in einem standardisierten Lastaufbringungszustand, in dem der Reifen (1) auf eine standardisierte Felge bei einem standardisierten Innendruck aufgezogen ist, eine standardisierte Last auf den Reifen (1) aufgebracht wird und der Reifen (1) mit einer flachen Oberfläche bei einem Sturzwinkel von 0° in Kontakt gebracht wird, das Paar Rillenwände (6) der Schulterumfangsrille (3) nicht miteinander in Kontakt sind und zumindest Teile des Paars Rillenwände (7) der Kronenumfangsrille (4) miteinander in Kontakt sind,
die Kronenumfangsrille (4) einen verbreiterten Abschnitt (10) auf einer Innenseite in einer Reifenradialrichtung in Bezug auf eine Laufflächen-Bodenkontaktfläche (2s) aufweist,
eine Rillenbreite (W2) des verbreiterten Abschnitts (10) größer als eine Rillenbreite (W1) an der Laufflächen-Bodenkontaktfläche (2s) der Kronenumfangsrille (4) ist,
eine Bandschicht (20), die eine fugenlose Bandlage (20A) umfasst, in der ein Bandkord spiralförmig in einem Winkel von 5 Grad oder weniger in Bezug auf eine Reifenumfangsrichtung gewickelt ist, im Inneren des Laufflächenabschnitts (2) vorgesehen ist, und
die fugenlose Bandlage (20A) so angeordnet ist, dass sie den Reifenäquator (C) bedeckt,
**dadurch gekennzeichnet, dass**
ein äußeres Ende (25) in einer Reifenaxialrichtung auf der Seite des ersten Laufflächenendes (T1) der fugenlosen Bandlage (20A) auf einer Außenseite in der Reifenaxialrichtung in Bezug auf ein äußeres Ende (3e) in der Reifenaxialrichtung der Schulterumfangsrille (3) angeordnet ist.

2. Reifen (1) nach Anspruch 1, wobei die Rillenbreite (W1) an der Laufflächen-Bodenkontaktfläche (2s) der Kronenumfangsrille (4) das 0,01- bis 0,2-fache einer Rillenbreite (Ws) der Schulterumfangsrille (3) beträgt.

3. Reifen (1) nach Anspruch 1 oder 2, wobei eine Rillenfläche eines Querschnitts der Kronenumfangsrille (4) das 0,1- bis 0,5-fache einer Rillenfläche eines Querschnitts der Schulterumfangsrille (3) beträgt.

4. Reifen (1) nach einem der Ansprüche 1 bis 3, wobei eine Länge (Lb) in der Reifenradialrichtung von der Laufflächen-Bodenkontaktfläche (2s) zu dem verbreiterten Abschnitt (10) das 0,4- bis 0,7-fache einer Rillentiefe (Dc) der Kronenumfangsrille (4) beträgt.

5. Reifen (1) nach einem der Ansprüche 1 bis 4, wobei ein Trennungsabstand (Lc) in der Reifenaxialrichtung zwischen dem äußeren Ende (3e) der Schulterumfangsrille (3) und dem äußeren Ende (25) der fugenlosen Bandlage (20A) 10 % bis 50 % eines Trennungsabstands (Ls) in der Reifenaxialrichtung zwischen dem äußeren Ende (3e) der Schulterumfangsrille (3) und dem ersten Laufflächenende (T1) beträgt.

6. Reifen (1) nach einem der Ansprüche 1 bis 5, wobei
eine Gürtelschicht (21), die mindestens drei Gürtellagen (21A, 21B, 21C, 21D) umfasst, in denen Gürtelkorde in einem Winkel von 10 bis 50 Grad in Bezug auf die Reifenumfangsrichtung angeordnet sind, im Inneren des Laufflächenabschnitts (2) vorgesehen ist, und
mindestens eine Gürtellage (21A, 21B) der mindestens drei Gürtellagen (21A, 21B, 21C, 21D) in der Reifenradialrichtung innen von der fugenlosen Bandlage (20A) angeordnet ist.

7. Reifen (1) nach Anspruch 6, wobei die Gürtellage (21A, 21B), die in der Reifenradialrichtung innen von der fugenlosen Bandlage (20A) angeordnet ist, ein äußeres Ende (e1, e2) an der Außenseite in der Reifenaxialrichtung in Bezug auf das äußere Ende (25) der fugenlosen Bandlage (20A) aufweist.

8. Reifen (1) nach einem der Ansprüche 1 bis 7, wobei
die Bandschicht (20) eine fugenlose Randbandlage (20B) umfasst, die benachbart zu dem ersten Laufflächenende (T1) ist und in der ein Bandkord spiralförmig in einem Winkel von 5 Grad oder weniger in Bezug auf die Reifenumfangsrichtung gewickelt ist, und
die fugenlose Randbandlage (20B) das äußere Ende (25) der fugenlosen Bandlage (20A) überspannt.

9. Reifen (1) nach Anspruch 8, wobei ein inneres Ende (26i) in der Reifenaxialrichtung der fugenlosen Randbandlage (20B) an der Außenseite in der Reifenaxialrichtung in Bezug auf das äußere Ende (3e) der Schulterumfangsrille (3) angeordnet ist.

10. Reifen (1) nach einem der Ansprüche 1 bis 9, wobei der Reifen (1) ein Schwerlastreifen mit einem Aspektverhältnis von 70 % oder weniger ist.

## Revendications

1. Pneumatique (1) comprenant :
une portion formant bande de roulement (2) ayant une première extrémité de bande de roulement (T1), dans lequel
la portion formant bande de roulement (2) a une rainure circonférentielle d'épaulement (3) adjacente à la première extrémité de bande de roulement (T1), et une rainure circonférentielle de couronne (4) prévue entre la rainure circonférentielle d'épaulement (3) et un équateur de pneumatique (C),
chacune de la rainure circonférentielle d'épaulement (3) et de la rainure circonférentielle de couronne (4) inclut une paire de parois de rainure (6, 7), dans un état d'application de charge standardisée dans lequel le pneumatique (1) est ajusté sur une jante standardisée à une pression interne standardisée, une charge standardisée est appliquée sur le pneumatique (1), et le pneumatique (1) est amené en contact avec une surface plate sous un angle de cambrure de 0°, la paire de parois de rainure (6) de la rainure circonférentielle d'épaulement (3) ne sont pas en contact l'une avec l'autre, et au moins des parties de la paire de parois de rainure (7) de la rainure circonférentielle de couronne (4) sont contacts les unes avec les autres,
la rainure circonférentielle de couronne (4) a une portion élargie (10) sur un côté intérieur dans une direction radiale du pneumatique par rapport à une surface de contact au sol de bande de roulement (2s),
une largeur de rainure (W2) de la portion élargie (10) est plus grande qu'une largeur de rainure (W1) au niveau de la surface de contact au sol de bande de roulement (2s) de la rainure circonférentielle de couronne (4),
une couche de bande (20) incluant une nappe de bande sans joint (20A) dans laquelle un câblé de bande est enroulé de manière hélicoïdale sous un angle de 5 degrés ou moins par rapport à une direction circonférentielle du pneumatique est prévue à l'intérieur de la portion formant bande de roulement (2), et
la nappe de bande sans joint (20A) est placée de manière à couvrir l'équateur de pneumatique (C),
**caractérisé en ce que**
une extrémité extérieure (25) dans une direction axiale du pneumatique sur le côté de la première extrémité de bande de roulement (T1) de la nappe de bande sans joint (20A) est située sur un côté extérieur dans la direction axiale du pneumatique par rapport à une extrémité extérieure (3e) dans la direction axiale du pneumatique de la rainure circonférentielle d'épaulement (3).

2. Pneumatique (1) selon la revendication 1, dans lequel la largeur de rainure (W1) au niveau de la surface de contact au sol (2s) de la rainure circonférentielle de couronne (4) est de 0,01 à 0,2 fois une largeur de rainure (Ws) de la rainure circonférentielle d'épaulement (3).

3. Pneumatique (1) selon la revendication 1 ou 2, dans lequel une aire de rainure d'une section en coupe transversale de la rainure circonférentielle de couronne (4) est de 0,1 à 0,5 fois une aire de rainure d'une section en coupe transversale de la rainure circonférentielle d'épaulement (3).

4. Pneumatique (1) selon l'une quelconque des revendications 1 à 3, dans lequel une longueur (Lb) dans la direction radiale du pneumatique depuis la surface de contact au sol de bande de roulement (2s) jusqu'à la portion élargie (10) est de 0,4 à 0,7 fois une profondeur de rainure (Dc) de la rainure circonférentielle de couronne (4).

5. Pneumatique (1) selon l'une quelconque des revendications 1 à 4, dans lequel une distance de séparation (Lc) dans la direction axiale du pneumatique entre l'extrémité extérieure (3e) de la rainure circonférentielle d'épaulement (3) et l'extrémité extérieure (25) de la nappe de bande sans joint (20A) est de 10 % à 50 % d'une distance de séparation (Ls) dans la direction axiale du pneumatique entre l'extrémité extérieure (3e) de la rainure circonférentielle d'épaulement (3) et la première extrémité de bande de roulement (T1).

6. Pneumatique (1) selon l'une quelconque des revendications 1 à 5, dans lequel
une couche de ceinture (21) incluant au moins trois nappes de ceinture (21A, 21B, 21C, 21D) dans lesquelles des câblés de ceinture sont agencés sous un angle de 10 à 50 degrés par rapport à la direction circonférentielle du pneumatique est prévue à l'intérieur de la portion formant bande de roulement (2), et
au moins une nappe de ceinture (21A, 21B) desdites au moins trois nappes de ceinture (21A, 21B, 21C, 21D) est située à l'intérieur de la nappe de bande sans joint (20A) dans la direction radiale du pneumatique.

7. Pneumatique (1) selon la revendication 6, dans lequel la nappe de ceinture (21A, 21B) située à l'intérieur de la nappe de bande sans joint (20A) dans la direction radiale du pneumatique a une extrémité extérieure (e1, e2) sur le côté extérieur dans la direction axiale du pneumatique par rapport à l'extrémité extérieure (25) de la nappe de bande sans joint (20A).

8. Pneumatique (1) selon l'une quelconque des revendications 1 à 7, dans lequel
la couche de bande (20) inclut une nappe de bande de bord sans joint (20B) qui est adjacente à la première extrémité de bande de roulement (T1) et dans laquelle un câblé de bande est enroulé de manière hélicoïdale sous un angle de 5 degrés ou moins par rapport à la direction circonférentielle du pneumatique, et
la nappe de bande de bord sans joint (20B) est à cheval sur l'extrémité extérieure (25) de la nappe de bande sans joint (20A).

9. Pneumatique (1) selon la revendication 8, dans lequel une extrémité intérieure (26i) dans la direction axiale du pneumatique de la nappe de bande de bord sans joint (20B) est située sur le côté extérieur dans la direction axiale du pneumatique par rapport à l'extrémité extérieure (3e) de la rainure circonférentielle d'épaulement (3).

10. Pneumatique (1) selon l'une quelconque des revendications 1 à 9, dans lequel le pneumatique (1) est un pneumatique pour service intensif ayant un rapport d'aspect de 70 % ou moins.
